(19) Europäisches Patentamt
European Patent Office
Office européen des brevets

(11) EP 0 892 198 A1

(12) **EUROPÄISCHE PATENTANMELDUNG**

(43) Veröffentlichungstag:
20.01.1999 Patentblatt 1999/03

(51) Int. Cl.$^6$: **F16J 15/00**, F16J 1/02,
F16J 1/24

(21) Anmeldenummer: 98202423.4

(22) Anmeldetag: 18.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 18.07.1997 EP 97202241

(71) Anmelder: Achermann, Werner
6374 Buochs (CH)

(72) Erfinder: Achermann, Werner
6374 Buochs (CH)

(74) Vertreter: Arato, Laszlo
Seebuchtstrasse 19,
Postfach 41
6374 Buochs (CH)

(54) **Koaxiale Kolbenführung**

(57) Für die Aufnahme der Normalkraftkomponente ($F_n$) des Kolbens einer Kolbenmaschine sind, zwecks koaxialer Führung, Walzkörper (30, 40, 50) vorgeschlagen, die am Aussenmantel des Kolbens (1, 1') oder eines zylindrischen Kreuzkopfes (1") angeordnet sind, oder sich zwischen einem Führungsschuh (34) eines Kreuzkopfes und des Maschinengehäuses (30), vorzugsweise in Rollenpaketen (60, 60') befinden. Geeignete Anordnung erlaubt die Rezirkulation der Walzenkörper, und die Verwendung der Schaltkolbenköpfe erzwingt die sukzessive Drehung des Kolbens oder des zylindrischen Kreuzkopfes gegenüber dem Maschinengehäuse so, dass die Berührungslinien der Walzenkörper in Funktion der Oszillation hubweise und inkremental verlegt werden und somit das Auswalzen der Stützfläche der Rollkörper verhindern. Die vorgeschlagene Massnahme begünstigt die Verwendung von geschlossenen Dichtungen (7).

Fig.2a    Fig.2b

Fig.2c

EP 0 892 198 A1

**Beschreibung**

Die Erfindung betrifft die Führung des Kolbens einer Kolbenmaschine.

Der Kolben ist die oszillierende Begrenzung eines, mit einem Deckel geschlossenen, zylindrischen Arbeitsraumes einer Maschine und dient der Kraftübertragung. Je nach dem, ob der Kolben der Umsetzung des Energieinhaltes des Arbeitsraumes in mechanische Energie, oder umgekehrt zur Verrichtung von Arbeit im Arbeitsraum dient, handelt es sich um Kraft- (Dampfmaschinen, Motoren) oder Arbeitsmaschinen (Pumpen, Kompressoren, Lufthammer). Der Kolben muss mit den Kolbenringen in all diesen Fällen den veränderlichen Arbeitsraum der Maschinen, vom übrigen mit dem Maschinengehäuse verbundenen Raum des Zylinders, abdichten. Die Dichtheit des Arbeitsraumes ist die grundlegende Voraussetzung dafür, dass im Arbeitsraum Kraft oder Arbeit entsteht. Die Kraft F eines Explosionsmotors ist das Produkt aus Gasdruck p und Zylinderquerschnitt $F = pA$. Wird die Gaskraft F in die auf der Pleuel = Kurbelstange $F_{St}$ und auf den Kolben senkrecht wirkende Normalkraftkomponente $F_n$ zerlegt, dann ist die Normalkraft $F_n = F \cdot \tan\beta$, wenn mit $\beta$ der Winkel zwischen der Kolbenachse und der Pleuel bezeichnet und die Wirkung der Massenkräfte vernachlässigt wird, (was für die konstruktive Auslegung unzulässig ist). Bei den 4-Takt-Verbrennungsmotoren ist $\beta$ etwa bei halbem Hub am grössten. Aus Indikatordiagrammen ist bekannt, dass sich die Kraft der Verbrennung $F_{Max}$ im selben Betriebspunkt auf etwa ein Fünftel reduziert. Die Normalkraft $F_n$ wirkt im Kolbenbolzen und presst den Kolben gegen die Zylinderwand, so dass der Kolben zum Führen gezwungen wird. Die Verwendung eines Kurbeltriebwerkes hebt die Wirkung der Normalkraft $F_n$ auf den Kolben auf, weil der Kreuzkopf eine eigene Führung hat und sich mit den Kolben und der Kolbenstange oszillierend bewegt. Der Kreuzkopf schafft mit der Kurbelstange die Verbindung zum rotierenden Kurbel. Kurbeltriebwerke weisen den 2-Takt Diesel auf, der den höchsten Wirkungsgrad unter den Verbrennungsmotoren präsentiert. Die stärksten Maschinen mit 5500 kW/Zylinder sind 2-Takt Diesel, die den Schiffsbau der Welt dominieren.

Der Stand der Technik bezeichnet die unmittelbare Führung des Kolbens, wie die Führung des Kreuzkopfes, als Gleitfuhrung. Bei Bewegung des Kolbens wie des Kreuzkopfes gleiten in der Tat zwei Metallflächen aufeinander. In den Endpunkten der Hin- und Herbewegung herrscht aber Ruhe- oder Kaftreibung, die immer grösser ist als die Gleitreibung. Je nach Gattung der Maschine wird ein Teil der Energie oder ein Teil der Arbeit an dieser Stelle unnütz in Reibungswärme umgewandelt.

Die Möglichkeiten der Optimierung, Verluste dieser Art zu reduzieren, sind mit der Werkstoffwahl und der Optimierung der Schmierung erschöpft. Ein weiterer Nachteil vom Stand der Technik ist, dass durch die Berührung der Führungsfläche des Kolbens mit der Zylinderwand, nebst der Abfallwärme auch Schall generiert wird. Im Sinne des Fortschritts ist bereits die Substitution der Gleitreibung durch Rollreibung vorgeschlagen und mit der Erprobung von bierfassartigen Rollkörpern im Kolben erprobt und die Nützlichkeit dieser Massnahme nachgewiesen worden. Weil allerdings keine Verbesserung mit Nachhaltigkeit erzielbar war, besteht die Aufgabe nach wie vor.

Aufgabe der vorliegenden Erfindung ist daher, die Nachteile des Stands der Technik so zu vermeiden, dass es möglich wird, den Wirkungsgrad der Kolbenmaschinen nachhaltig zu steigern, die Immissionen entsprechend zu reduzieren und, je nach Gattung der Maschine, den Aufwand an Treibstoff oder Antriebskraft weiter zu reduzieren und dabei die Servicefreundlichkeit der gewählten Massnahmen sicherzustellen.

Erfindungsgemäss wird der Kolben und/oder die Führung eines zylindrisch gestützten Kreuzkopfes mit Rollkörpern versehen, so dass sich die Rollbahnen an der Stützfläche in Funktion der Oszillation ständig verschieben, und/oder bei planparallelen Flächen die Rollkörper so zum Einsatz kommen, dass keine Rillenbildung durch Einwalzen entsteht.

Die vorliegende Erfindung ermöglicht die Erreichung dieser Ziele mit den geschilderten Vorteilen. Ein weiterer Vorteil ist die Verbesserung der Laufruhe der Kolbenmaschinen. Weil die Reibungswärme der erfindungsgemässen Kolbenmaschine kleiner ist, verringert sich ausserdem ihr Bedarf und Aufwand an Kühlung. Ein weitere Vorteil der vorgeschlagenen Lösung ist, dass die vorgeschlagenen Teile, die dem Verschleiss ausgesetzt sind, typische Ersatzteile, und somit normierte Teile mit hoher Verfügbarkeit und guter Austauschbarkeit sind. Diese Vorteile machen den Mehraufwand der vorgeschlagenen Lösung mehr als wett, so dass sich insgesamt die Entstehungs- und Betriebskosten der vorgeschlagenen Verbesserungen der Kolbenmaschinen mehr als bezahlt machen.

Nachfolgend wird die Erfindung anhand von Ausführungsvarianten beispielsweise erklärt. Die Zeichnungen zeigen:

Fig.1a/1b    den Kolben eines Verbrennungsmotors mit Schrittkolben und Kugelbüchsen im Aufriss, im Halbschnitt und in Halbansicht, und mit Dichtung konventioneller Art,

Fig.1c    den Querschnitt der Figuren 1a/1b,

Fig.2a/2b    den Kolben eines Verbrennungsmotors mit Zylinder, im Aufriss, im Halbschnitt und in Halbansicht, mit einer geschlossenen Dichtung,

Fig.2c    den Querschnitt der Figuren 2a/2b,

Fig. 3a/3b    ein zweigleisiger Kreuzkopf einer Kolbenmaschine mit zirkulierenden Kugeln im geschnittenen Kreuzkopf, im Aufriss, im Halbschnitt und in Halbansicht,

Fig. 3c      den Querschnitt der Figuren 3a/3b,

Fig. 4,      den Querschnitt des Kugelhalters der Umlaufkugelführung mit Befestigung,

Fig. 5,      die Verankerung des Kugelhalters im Schlitz des Kolbenkörpers,

Fig. 6      die Umlaufbahn im Querschnitt mit Armierung des belasteten Bahnabschnittes,

Fig. 7      eine Kugelbüchse, mit und ohne Kugellagerung,

Fig. 8      den Querschnitt des Kurbeltriebes eines 2-Takt Grossdiesels mit Kreuzkopf`

Fig. 9      Umlaufrollen Pakete in Serie,

Fig. 10      den Querschnitt eines Umlaufrollen Paketes.

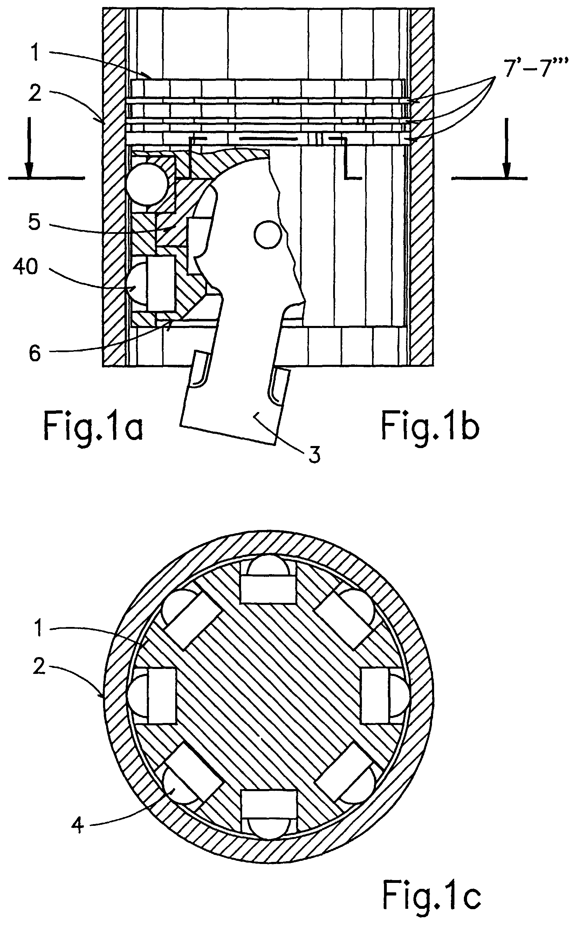

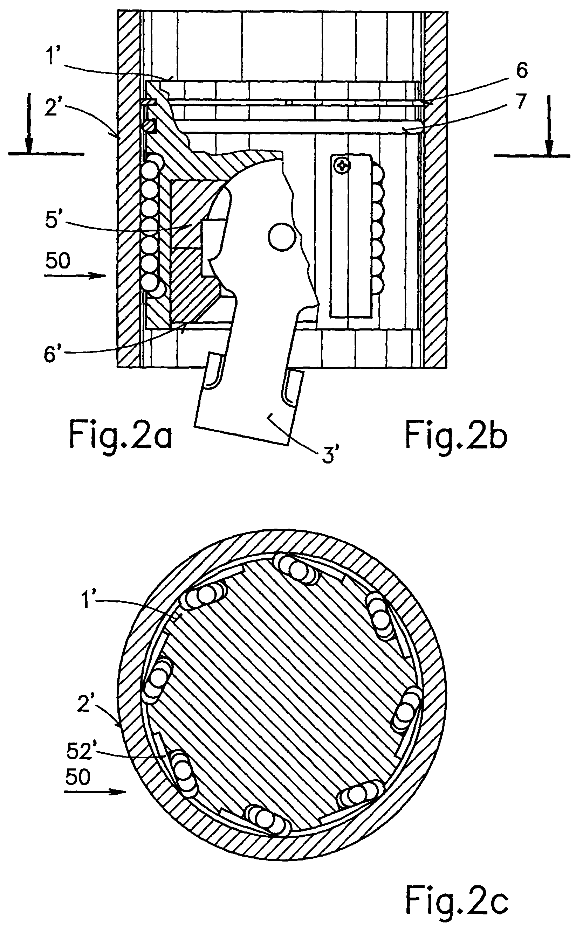

Die Figuren 1a/1b zeigen den Kolben 1 eines Verbrennungsmotors im Zylinder 2, mit Pleuel und Schaltkopf 3, sowie Anpress- 5 und Lagerring 6 sowie die konventionellen Kolbenringe als Dichtungs- 7', 7" und Abstreifringe 7''', im Aufriss, respektive Halbschnitt (Fig. 1a) und in Halbansicht (Fig. 1b). Ein sich bei jeder Bewegung der Oszillation um die Kolbenachse um Winkelinkrementen drehender Schrittkolben ist aus der Veröffentlichung CH-613 356 bekannt. Aus der Darstellung der Figuren 1a, b (und 3a, b) ist Arbeitsweise und Aufbau des Schaltkolbens nicht ersichtlich. Platzbedarf und Funktion im Kolben 1 (1') ist aber mit Schaltkopf und Pleuel 3 sowie Anpress- 5 und Lagerringen 6 andeutungsweise vorhanden. Der Kolben 1 und die Anpress-5 und Lagerringe 6 dienen der Aufnahme der Walzkörper, die in Form von Kugelbüchsen 40, in zwei übereinander liegenden Reihen, und entsprechend der Figur 2, am Umfang des Kolbens 1 sternförmig angeordnet sind. Die Kugeln 4 der Kugelbüchsen 40 berühren die Innenwand des Zylinders 2 punktförmig. Weil der Kolben 1 mit Schaltkopf und Pleuel 3 ausgerüstet ist, verdreht sich der Kolben 1 gegenüber dem Zylinder 2 bei der Oszillation um einige Winkelgrade, so dass die Berührungspunkte der Kugel 4 der Kugelbüchsen 40 auf dem Innenmantel des Zylinders 2 individuelle Berührungslinien zeichnen, die gegenübereinander entsprechend dem Schaltinkrement verschoben sind.

In Figur 1c ist ein Querschnitt des Kolbens 1 und des Zylinders 2 entsprechend der Schnittführung der Figuren 1a/1b abgebildet. Sie zeigt die sternförmige Anordnung der Kugeln an der Peripherie des Kolbens, und dass die Anordnung der Kugeln vorzugsweise symmetrisch ist.

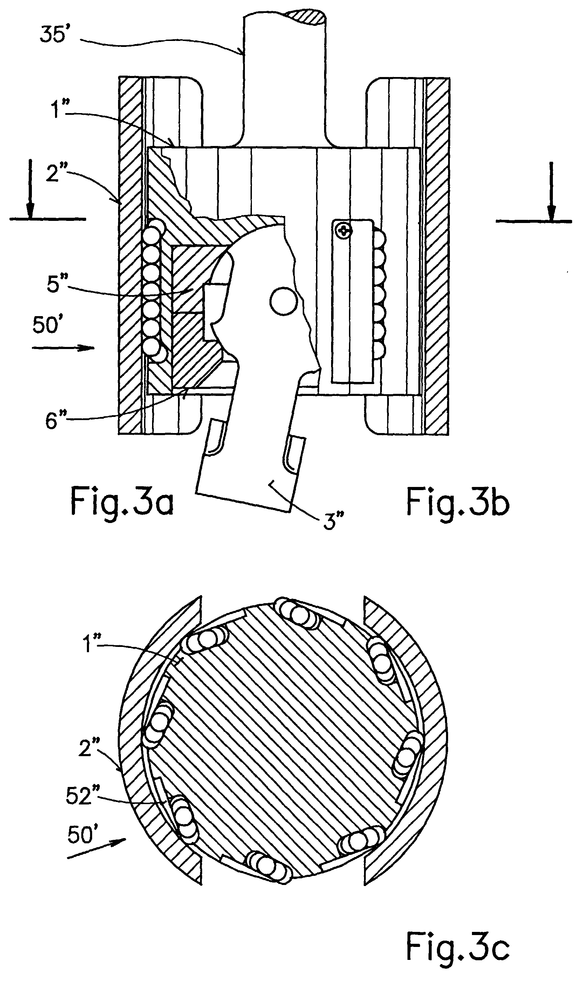

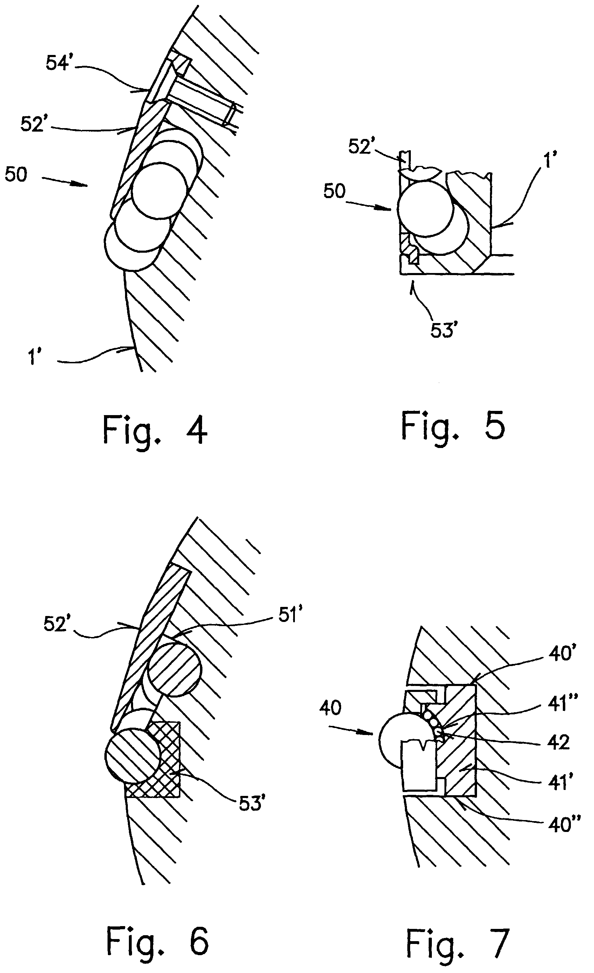

In den Figuren 2a/2b ist der aus den Figuren 1a - 2b bekannte Kolben 1' und Zylinder 2' eines Verbrennungsmotors mit Schaltkopf und Pleuel 3' sowie Anpress- 5' und Lagerringen 6' ausgerüstet. Die entlang der Mantellinie des Kolbens 1' in Reihen geordneten Kugeln 50 sind durch eine geschlossene Umlaufbahn 51' (vgl. Fig. 3 und Fig. 6) geführt. Die Kugeln 50 liegen an der Zylinderwand 2 auf und zirkulieren bei der oszillierenden Längsbewegung pendelnd. Dank der Führung der Kugeln 50 sind die Mittelachsen des Zylinders 2' und des Kolbens 1' in jeder Stellung des Pleuels 3 koinzident, so dass die Dichtung 7 keine Führungsaufgabe des Kolbens zu verrichten hat, wie das bei Kurbel-Kolbenmaschinen üblich ist. Die Dichtung 7 ist daher weniger belastet und kann somit ein geschlossener Ring, beispielsweise aus Fluorkunststoff, sein, der seine Aufgabe mit bescheidener Reibung und Abnützung erfüllt. Damit die Dichtung 7 von der Verletzung eventueller Ablagerungen von Verbrennungsrückständen verschont bleibt, wird die Verwendung eines Abstreifringes 6 vorgesehen.

Figur 2c zeigt den Querschnitt des Kolbens 1' entsprechend der Schnittführung der Figuren 2a/2b. Sie offenbart die sternförmige Anordnung der Umlaufbahnen 51' die zum Teil von schildartigen Kugelhaltern 52' (vgl. Fig.4) bedeckt sind. Die Positionierung der Kugelhalter 52' erfolgt in den eingesenkten koaxialen Nut 51', gemäss Figur 5. Fixiert wird der Kugelhalter 52' in seine Einsenkung durch die Senkkopfschraube 54' nach Figur 4.

Figur 6 zeigt die Umlaufbahn 51' der Kugeln 50 mit dem Kugelhalter 52' im Querschnitt. Da ist auch die Armierung der Lastzone 53' der Umlaufbahn 41' zu sehen, die, wenn der Kolben aus Leichtmetallegierung gefertigt ist, die Druck- und Dauerwälzfestigkeit des Kolbens im Bereich des Kugelkanals erheblich zu steigern hilft. Entsprechende Werkstoffe der Armierung sind aus Al-Si und sind unter dem Handelsnamen LOKASIL bekannt. Analog der Figuren 1a/b und 2a/b sowie 1c und 2c ist die Ausführung von Kreuzköpfen 1" (vgl. Fig. 3a/b/3c) in Rundführungen 2" möglich. Rundführungen 2" sind sehr einfach, aber wegen der schlechten Zuganglichkeit unbeliebt. Wegen diesen Umständen wird auf die Wiederholung der bereits geschilderten Massnahmen verzichtet aber festgehalten, dass die Anwendung des Schaltkopfes 3", 5", 6" und der Kugelführung 50', 52" die Erzeugung von individuellen Berührungslinien der Kugeln auch an der runden Führung von Kreuzköpfen erlaubt und durch diese Massnahme das Einwalzen der Kugeln in die Fläche der Führung verhindert wird, und dass die Kontinuität der zylindrischen Führungsfläche der Rundführung 2" keine Bedingung ist, so dass die Ausrüstung des zweigleisigen Kreuzkopfes 1" der runden Ausführung mit Kugeln 50' unproblematisch ist. Der in Figur 3a/b/c gezeigte zweigleisige Kreuzkopf 3" einer Kolbenmaschine mit zirkulierenden Kugeln 50' im geschnittenen Kreuzkopf 1", ist im Aufriss, im Halbschnitt und in Kalbansicht dargestellt. Die Kolbenstange 35' wird durch die Gleitbahnen 2" geführt, so dass die Normalkraftkomponente auf das nicht gezeigte Gehäuse der Kolbenmaschine übergeht, so dass die koaxiale Führung des Kolbens im Zylinder, die nicht gezeigt wird, gewährleistet ist.

Figur 3c zeigt den Querschnitt der Figuren 3a/3b entsprechend der dortigen Schnittführung. Figur 7 zeigt Ausführungen der Kugelbüchse 40, wobei die Kugel als gemeinsamer Teil von zwei Versionen der verkapselten Ausführung dienen. Diese Ausführungen unterscheiden sich lediglich dadurch, dass der Napf 41' gegenüber dem Kolbenwerkstoff, wie oben beschrieben, durch eine Armierung verstärkt ist und sich durch erhöhte Druck- und Dauerwälzfestigkeit auszeichnet, und dass der Napf 41" als Kugelauflage zusätzlich mit kleinen Kugeln 42 gefüttert ist.

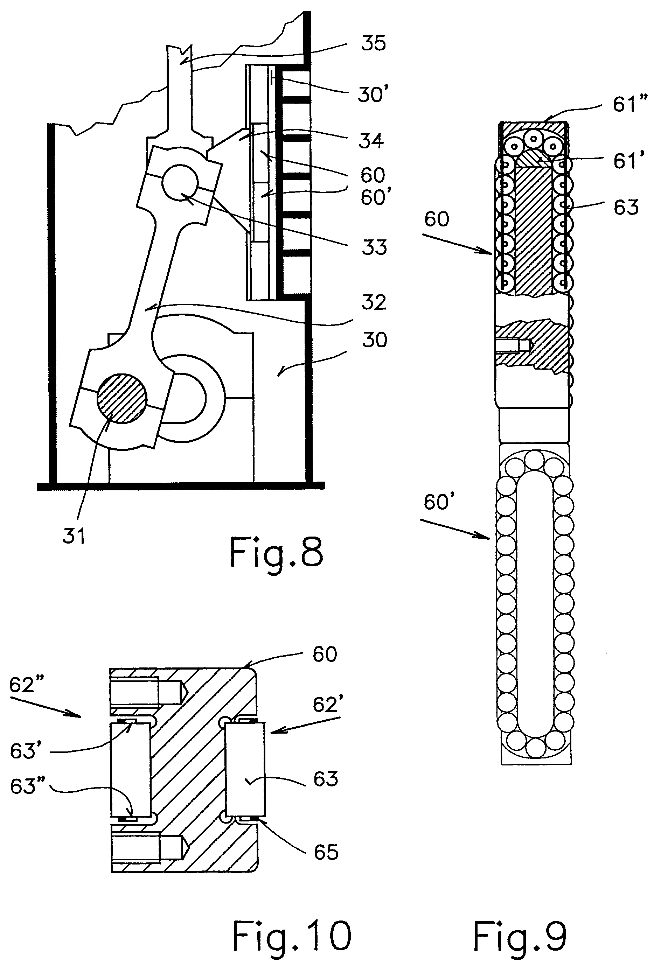

Figur 8 zeigt den Querschnitt des Kurbeltriebes eines 2-Takt Grossdiesels mit Gehäuse 30, Kurbelwelle 31, Kurbeistange 32, Kreuzkopf 33, und, dank dem Führungsschuh mit einseitiger ebener Führung 34, die gerade und koaxial geführte Kolbenstange 35. Auf der Führungsfläche des Führungsschuhs 34 sind Rollenpakete 60, 60' geschraubt, die wie die Figur 10 und der Querschnitt der Darstellung in Figur 11 zeigt, aus einem Führungskörper 61 mit beidseitigem Führungsnut 62', 62" und einer Anzahl Zylinderrollen 63 mit Endzapfen 63', 63" gefüllt sind, und aus dem Führungskörper sowie den Endstücken 61' und 61" und den Führungsstäben 65 bestehen. Entsprechend der Figur 10 sind die Zylinderrollen 63 Umlaufrollen, die vom Führungskörper an die gehärtete Plattierung 30' gedrückt werden. Die Plattierung 30' ist mit der senkrechten Stützwand des Gehäuses 30 verbunden, um die hohe, linienförmige Belastung der Rollen ohne Schaden zu ertragen. Damit die Zylinderrollen 63 stets im Führungskörper 60, 60' bleiben, sind die Rollen 63 an ihren beiden Enden mit Führungszapfen 63', 63" versehen, die von den Führungsstäben 65' - 65$^{IV}$ überlagert und somit gehalten sind, was für die problemlose Handhabung der Rollenpakete 60 wichtig ist.

Generell lässt sich die Schmierung nach dem Stand der Technik als Dauer-, Spritz-, Umlauf- oder Badschmierung verwirklichen. Für die vorliegenden Vorschläge dürfte sich die Umlaufschmierung am besten eignen, die sich bei den Grossdieseln bestens bewährt hat.

**Patentansprüche**

1. Koaxiale Kolbenführung einer Kraft- oder Arbeitsmaschine bestehend aus mindestens einem Gehäuse (2, 2',2", 30, 30') und aus mindestens einem oszillierenden Kolben (1, 1', 1"), der mit einer drehenden Kurbelwelle (31) durch eine Kurbelstange (3, 3', 3", 32) oder Kolbenstange (35) verbunden ist, dadurch gekennzeichnet, dass die Normalkraftkomponente ($F_n$) vom Kolben (1, 1', 1") durch Rollkörper (4, 40, 50, 63) auf das Gehäuse (2, 2', 2", 30, 30') übertragen wird, und dass die Rollkörper punktweise (4, 40, 50) oder in Form einer geraden Linie aufliegen.

2. Koaxiale Kolbenführung nach Anspruch 1, dadurch gekennzeichnet, dass der oszillierende Körper (1, 1', 1") und sein Gehäuse (2, 2', 2") zylindrisch sind und dass die Rollkörper Kugeln (4, 40, 50) sind und teilweise hervorstehen und das Gehäuse (2, 2', 2") punktweise berühren und dass sich der oszillierende Körper (1, 1', 1") sich gegenüber dem zylindrischen Gehäuse (2, 2") dank einem Schaltkopf (3, 3', 3") bei der Oszillation inkrementenweise dreht, so dass die Kugeln (4, 40, 50) das Gehäuse (2, 2") höchstens nach einer vollen Umdrehung des Körpers (1, 1') an der gleichen Stelle berühren.

3. Koaxiale Kolbenführung nach Anspruch 1 und 2 dadurch gekennzeichnet, dass der Aussenmantel eines Kolbens (1) an der Aussenfläche des Kolbenkörpers napfartige Vertiefungen mit Kugeln (4) trägt.

4. Koaxiale Kolbenführung nach den Ansprüchen 1 bis 2, dadurch gekennzeichnet, dass der Aussenmantel eines Kolbens zylindrische Vertiefungen (40', 40") für die Aufnahme von Topf- oder Kugelbüchsen (41', 41") trägt, die an der Peripherie des Kolbens (1) schichtweise und in der Schicht sternweise verteilt sind.

5. Koaxiale Kolbenführung nach den Ansprüchen 1 bis 4, dadurch gekennzeichnet, die Kugel (40) einer Topfrolle als Wälzkörper dient und die Kugel (40) der Topfrolle sich auf kleine Kugeln (42) stützt.

6. Koaxiale Kolbenführung nach Anspruch 1 und 2, dadurch gekennzeichnet, dass die Kugeln (50) auf geschlossenen Umlaufbahnen (51') im Kreislauf geführt werden, und dass die einzelnen Umlaufbahnen (51') teilweise mit schildartigen Kugelhaltern (52') bedeckt und die Umlaufbahnen (51') am Aussenmantel des Kolbens (1') oder des Kreuzkopfes (1") sternweise verteilt sind.

7. Koaxiale Kolbenführung nach Anspruch 1 und 2, dadurch gekennzeichnet, dass sich der Kreuzkopf (33) mit einem Führungschuh (34) mit Rollenpaketen (60, 60') auf das Gehäuse (30, 30') stützt, und dass die Rollenpakete (60, 60') vorzugsweise mit Zylinderrollen (63) gefüllt sind, die in einem umlaufenden Führungsnut (62', 62") rezirkulieren.

8. Koaxiale Kolbenführung nach den Ansprüchen 1, 2 und 7, dadurch gekennzeichnet, dass das Gehäuse (30) im Laufbereich der Rollenpakete (60, 60') mit gehärteter Plattierung versehen ist.

9. Koaxiale Kolbenführung nach den Ansprüchen 1, 2, 7 und 8, dadurch gekennzeichnet, dass die Zylinderrollen (63) auf ihren Stirnseiten zentrierte Zapfen (63', 63") aufweisen, die von Führungsstäben (65) so überlagert sind, dass sich die Rollen (63) der Rollenpakete (60) ungehindert bewegen können, aber gegen das Herausfallen aus den Führungsnuten (62', 62") gesichert sind.

10. Koaxiale Kolbenführung nach den Ansprüchen 1 bis 9 dadurch gekennzeichnet, dass der Kolben ohne Last der Normalkraftkomponente ($F_n$) mindestens einen geschlossenen Dichtring (7) trägt.

Fig.1a            Fig.1b

Fig.1c

Fig.2a

Fig.2b

Fig.2c

Fig.3a   Fig.3b

Fig.3c

Fig. 4

Fig. 5

Fig. 6

Fig. 7

Fig.8

Fig.10          Fig.9

# EP 0 892 198 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>A | US 5 437 220 A (CHENG ET AL)<br>1. August 1995<br>* das ganze Dokument *<br>--- | 1<br><br>3,4,8,10 | F16J15/00<br>F16J1/02<br>F16J1/24 |
| X<br>A | US 5 615 600 A (CHENG ET AL) 1. April 1997<br>* das ganze Dokument *<br>--- | 1<br>3,7-10 | |
| A | EP 0 003 309 A (STEYR-DAIMLER-PUCH)<br>8. August 1979<br>* Zusammenfassung; Abbildungen *<br>--- | 2 | |
| A | DE 29 25 053 A (MONACELLI) 10. Januar 1980<br>* Seite 4, Zeile 24 - Zeile 26; Abbildung 2 *<br>----- | 10 | |

**RECHERCHIERTE SACHGEBIETE (Int.Cl.6)**

F16J

Der vorliegende Recherchenbericht wurde für alle Patentansprüche erstellt

| Recherchenort | Abschlußdatum der Recherche | Prüfer |
|---|---|---|
| DEN HAAG | 3. November 1998 | Narminio, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
    Dokument

EPO FORM 1503 03.82 (P04C03)